# EUROPEAN PATENT SPECIFICATION

(11) **EP 3 302 882 B1**
(45) Date of publication and mention of the grant of the patent: **10.05.2023**
(21) Application number: 16804555.7
(22) Date of filing: 03.06.2016
(51) Int. Cl.: B25B 21/02, B25B 23/147, B25F 5/00, H02K 7/14

(54) **POWER TOOLS WITH USER-SELECTABLE OPERATIONAL MODES**
ELEKTROWERKZEUGE MIT BENUTZERWÄHLBAREN BETRIEBSMODI
MACHINES PORTATIVES À MOTEUR À MODES DE FONCTIONNEMENT SÉLECTIONNABLES PAR L'UTILISATEUR

(30) Priority: 05.06.2015 US 201562171504 P
(43) Date of publication of application: 11.04.2018
(73) Proprietor: Ingersoll-Rand Industrial U.S., Inc., Davidson, NC 28036 (US)
(72) Inventor: ELY, Sean C., Flemington, New Jersey 08822 (US); XIE, Pinhua, Kendall Park, New Jersey 08824 (US); BARTOSZEK, Jason Christopher, Bethlehem, Pennsylvania 18020 (US); JOHNSON, Joshua Odell, Allentown, Pennsylvania 18104 (US); SEITH, Warren A., Bethlehem, Pennsylvania 18020 (US); MADINENI, Vikram, Somerset, New Jersey 08873 (US); COOPER, Timothy Richard, Titusville, New Jersey 08560 (US)
(74) Representative: Murgitroyd & Company
(86) International application number: PCT/US2016/035807
(87) International publication number: WO 2016/196984

(56) References cited:
- EP-A2- 1 943 061
- EP-B1- 1 943 061
- WO-A1-2011/013852
- WO-A1-2014/098256
- DE-A1-102005 015 900
- US-A1- 2012 279 736
- US-A1- 2013 062 086
- US-A1- 2013 269 961
- US-A1- 2013 269 961
- US-A1- 2013 333 904
- US-A1- 2013 342 144
- US-A1- 2014 158 390
- US-A1- 2015 041 163
- US-A1- 2015 047 943

## Description

### TECHNICAL FIELD AND SUMMARY

The present disclosure relates, generally, to power tools and, more particularly, to power tools with various user-selectable operational modes.

Power tools (e.g., impact tools) typically include a trigger designed to be operated by a user to control the amount of power delivered to a motor of the power tool and, hence, the amount of motive force delivered by the motor to an output spindle of the power tool. Many power tools on the market today rely solely on the user to actively adjust the speed and duration of run time of the tool by manipulating the trigger. U.S. Patent Publication 2014/158390 describes an electric power tool including a microprocessor and a memory unit, wherein the memory unit is configured to store control information by learning a use state of the motor, and wherein the motor is configured to be driven according to the stored control information. U.S. Patent Publication 2013/269961, US 2013/062086, and DE 10 2005 015900 A1 describe power tools with torque limiters. The impact tool seen in DE 10 2005 015900 A1 is according to the pre-amble of claim 1.

It is an object of the present invention to provide a hand-held power tool with a controller that is operable to determine in which phases of a fastening operation the hand-held power tool is operating. This object can be achieved by the features as defined by claim 1. Further enhancements are characterised by the dependent claims. An illustrative embodiment of the present disclosure provides a hand-held power tool which comprises a housing assembly, an output spindle, a motor endbell, and a controller. The housing assembly supports an electric motor having a rotor configured to rotate when the electric motor is supplied with power. The output spindle protrudes from an output end of the housing assembly, and is functionally coupled to the rotor such that the output spindle rotates in response to a rotation of the rotor. The motor endbell is located on the housing assembly adjacent the electric motor and opposite the output spindle. The controller is operable to determine phases of a fastening operation in which the hand-held power tool is operating. The phases of the fastening operation of the hand-held power tool comprise two phases including: (1) a continuous run phase and (2) an impacting phase. The continuous run phase is characterized by a first rotational speed, continuous rotation, and low output torque of the output spindle until the output spindle experiences a threshold rotational resistance from a fastener being rotated by the hand-held power tool. The impacting phase begins once the threshold rotational resistance from a fastener being rotated by the hand-held power tool occurs. The impacting phase is characterized by the output spindle experiencing intermittent rotations at a second rotational speed that is a lower speed than the first rotational speed, and is at a higher output torque.

In the above and other embodiments of the present disclosure may also comprise: the phases of the fastening operation are determined by a current drawn by the electric motor, and wherein during the impacting phase, the motor draws more current than during the continuous run phase; the phases of the fastening operation are determined by the controller from the group consisting of at least one of detects a speed of rotation of the electric motor using an electromagnetic field from the electric motor, monitors output of an encoder positioned adjacent the rotor of the electric motor, monitors output of a resolver positioned on the rotor, and monitors output of at least one Hall-effect sensor positioned in proximity to rotor magnets on the electric motor; the phases of the fastening operation are determined from the group consisting at least one of the controller identifies deceleration of the rotor of the electric motor due to an increased motor load, an electric motor drive identifies an abrupt change in motor torque by monitoring control loop error values; the controller monitors battery voltage; the controller monitors output signals of a microphone positioned in the hand-held power tool such that when a predetermined noise is generated by an impact mechanism in the hand-held power tool and is detected by the microphone the output signals are sent to the controller, a sensor located adjacent the impact mechanism to determine if a hammer has moved wherein the sensor is selected from the group consisting of a Hall-effect sensor, a linear variable differential transformer (LVDT), and a microswitch, and a torque sensor installed between the electric motor and the impact mechanism to measure a torque increase to indicate impacting; at least one sensor to monitor the phases of the fastening operation selected from the group consisting of an anvil angle encoder, a hammer angle sensor, a hammer axial travel sensor, an accelerometer on a hammer, a motor brush bounce sensor configured to detect interruptions caused when a brush leaves a commutator of the electric motor, a cone clutch integrated into a front location on the handheld power tool configured to begin slipping at a preset torque, and a sensor to detect torsional vibrations to determine a socket angle; the power to the electric motor is based on the phases of the fastening operation and a plurality of operation modes; during the impacting phase, the motor draws more current than during the continuous run phase such that after an initial spike in the current supplied to the electric motor when the electric motor begins rotating less current than the initial spike is applied to the electric motor to maintain a constant speed, wherein once impacting has begun the current applied to the electric motor increases while the load applied to the electric motor increases; and the electric motor is a brushless DC motor, wherein the controller switches power on and off through windings of the brushless DC motor to monitor a rotational position or speed of the brushless DC motor.

Another illustrative embodiment of the present disclosure provides a handheld power tool which comprises a housing assembly, an output spindle, an electric motor, a motor endbell, and a user interface. The housing assembly supports the electric motor having a rotor configured to rotate when the electric motor is supplied with power. The output spindle protrudes from an output end of the housing assembly. The output spindle is functionally coupled to the rotor such that the output spindle rotates in response to a rotation of the rotor. The motor endbell is located on the housing assembly adjacent the electric motor and opposite the output spindle. The user interface configured to select one of a plurality of operation modes of the hand-held power tool which control the power supplied to the electric motor based on phases of a fastening operation of the hand-held power tool. These phases of the fastening operations are selected from the group consisting of a continuous run phase and an impacting phase.

In the above and other embodiments of the present disclosure may also comprise: the continuous run phase being characterized by a first rotational speed, continuous rotation, and low output torque until the output spindle experiences a threshold rotational resistance from a fastener being rotated by the hand-held power tool, wherein the impacting phase begins once the threshold rotational resistance from the fastener being rotated by the hand-held power tool occurs, and wherein the impacting phase is characterized by the output spindle experiencing intermittent rotations at a second rotational speed that is a lower speed than the first rotational speed, and is at a higher output torque; a first operation mode of the plurality of operation modes is a standard mode, such that full power is delivered to the electric motor during the continuous run phase and the impact phase; a second operation mode of the plurality of operation modes being a reduced power mode, such that full power being delivered to the electric motor during the continuous run phase and less than the full power being delivered to the electric motor during the impact phase; when in the reduced power mode and when the hand-held power tool impacts, the current through the electric motor rises which indicates to the controller that the impacting phase has begun and reduces the power delivered to the electric motor; a third operation mode of the plurality of operation modes being a torque stick stability mode, such that the controller being configured to avoid operating speeds that create oscillations in the hand-held power tool that cause the hand-held power tool to vibrate; a fourth operation mode of the plurality of operation modes being a snug-up mode, such that the controller maintains the electric motor operating for a predetermined amount of time after a rise in current being detected by the controller indicating that the hand-held power tool has entered the impacting phase, and wherein the predetermined amount of time being determined by an internal clock of the controller; during the snug-up mode the controller keeps the electric motor operating for a predetermined amount of time at a predetermined speed during the continuous run phase, and wherein the predetermined speed is less than full speed of the electric motor; the fastening speed of the hand-held power tool being maintained during run-down, while final torque is applied to a fastener by the hand-held power tool is limited; the plurality of operation modes are user-selectable operational modes; a fifth operation mode of the plurality of operation modes being a snug-up soft mode, such that rotating the output spindle at full speed during the continuous run phase being followed by impacting the output spindle at a reduced power for a fixed amount of time during the impacting phase; the plurality of operation modes are configured to include a number of impacts in a reverse direction after any one of the plurality of operation modes has concluded operation; one operation mode of the plurality of operation modes includes a low torque that stays in the continuous run phase and not the impacting phase; the plurality of operation modes include a cross thread mode where, at a start of the continuous run phase, the output spindle rotates at the first rotational speed for a predetermined duration before accelerating to a second speed; and the user interface being operable to select the plurality of operational modes being a rotational knob positioned on a rear portion of the hand-held power tool, and the rotational knob being locatable at one or more positions that correspond to the plurality of operation modes.

### BRIEF DESCRIPTION OF THE DRAWINGS

The concepts described in the present disclosure are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels may be repeated among the figures to indicate corresponding or analogous elements.
FIG. 1 is a perspective view of one illustrative embodiment of a power tool;
FIG. 2 is a side elevation view of the power tool of FIG. 1;
FIG. 3 is a front elevation view of the power tool of FIG. 1;
FIG. 4 is a rear elevation view of the power tool of FIG. 1;
FIG. 5 is a simplified block diagram illustrating various components of the power tool of FIG. 1;
FIG. 6 is a flow chart illustrating of one illustrative embodiment of a process for implementing user-selected operational modes of the power tool of FIG. 1;
FIG. 7 is a graph representing the current delivered to a motor of the power tool of FIG. 1 while operating in a reduced power mode; and
FIG. 8 is a graph representing the current delivered to the motor of the power tool of FIG. 1 while operating in a snug-up mode.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure which are disclosed in the appended claims

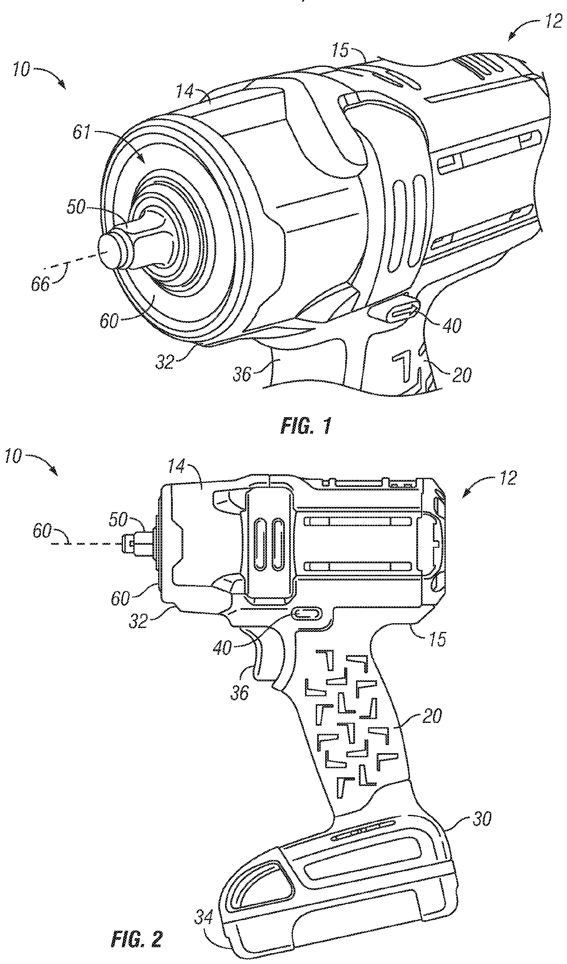

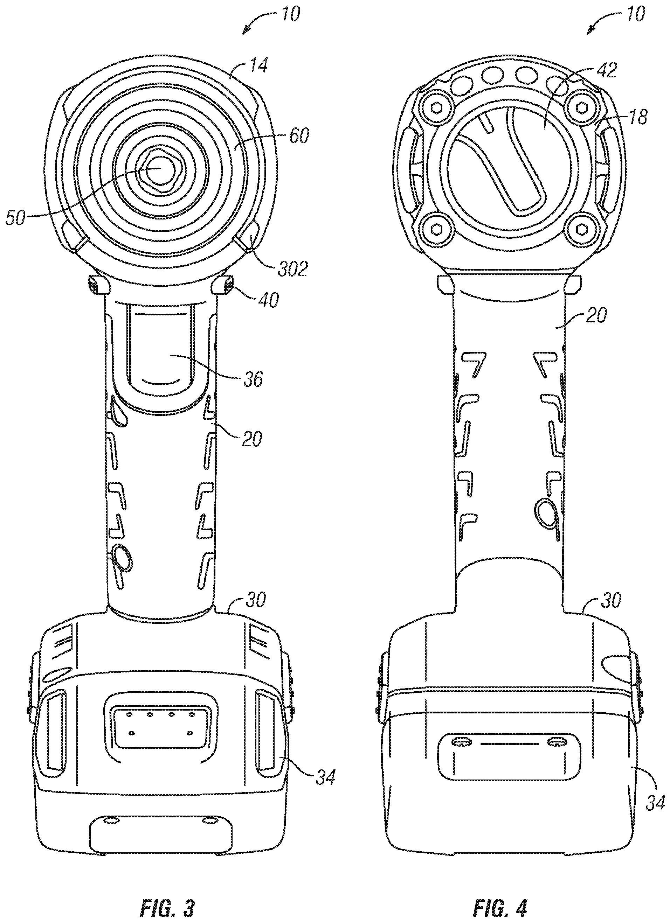

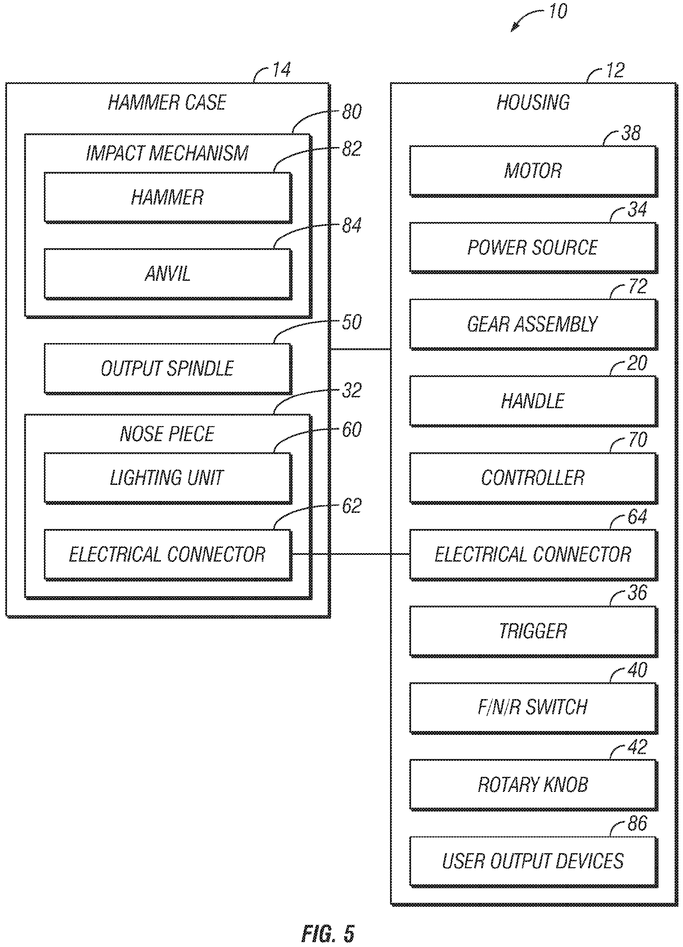

FIGS. 1-5 illustrate one embodiment of a power tool 10, more particularly an impact tool 10, that includes a housing 12and a hammer case 14. The housing 12 includes a motor housing 15, a handle 20, and a power source housing 30, among other components. The motor housing 15 encloses a motor 38 (see Fig. 5) configured to provide a motive force and a gear assembly 72 (see Fig. 5) configured to translate the motive force from motor 38 to an output spindle 50 of the power tool 10. In the illustrative embodiment, the handle 20 extends between the motor housing 15 and power source housing 30 and is configured to be graspable by a user of the power tool 10. Power source housing 30 is coupled to an end of the handle 20 opposite the motor housing 15 and is configured to connect to a power source 34 (see Fig.2), for example, a battery or a source of motive fluid, such as compressed air. In the illustrative embodiment, the power tool 10 is an electric impact tool, which is powered by a battery removably coupled to the power source housing 30. In the illustrative embodiment, the motor 38 is an electric motor, more particularly a brushless direct-current (DC) motor.

In the illustrative embodiment, the power tool 10 also includes a controller 70 supported in the housing 12 (see Fig. 5), connected to the power source 34, and configured to manage a plurality of processes associated with the operation of the power tool 10. In some embodiments, the controller 70 includes a processor, memory, an input/output subsystem, and other components as might be necessary to perform the functions disclosed herein. The controller may be embodied as any type of electronics capable of implementing digital logic. The memory may be configured as a read-only memory (ROM), a random access memory (RAM), a flash memory, or an electronically-erasable programmable ROM (EEPROM).

The housing 12 as shown in Figs 1, 2, 3, and 4, includes a number of user-selectable input devices (e.g., triggers, switches, and knobs) configured to allow the user to adjust one or more user selectable features of the power tool 10. For instance, the housing 12 includes a trigger 36 positioned on the handle 20 near the motor housing 15, such that trigger 36 may be operated by a user grasping the handle 20 of the power tool 10. In many power tools, the primary function of the trigger is to control the motive force delivered by the motor to the output spindle. Trigger 36 is spring loaded and will default to keeping the power tool 10 powered off. As the user pulls trigger 36, power is delivered from the power source 34 to motor 38 causing motor 38 to rotate. In some embodiments, trigger 36 may include many positions, such that the more the trigger is depressed, the more power is delivered to motor 38 and the faster motor 38 rotates.

For example, in a normal operation mode of the power tool 10, if the trigger 36 is fully depressed by the user, motor 38 will cause output spindle 50 to rotate with full power. In another example, in a normal operation mode, if trigger 36 is only partially depressed by the user, motor 38 will supply less than full power to the output spindle 50. In some embodiments, trigger 36 may also be used to control other features of the power tool 10, such as the operation of a headlight or lighting unit 60 of power tool 100. For example, depressing trigger 36 may turn on lighting unit 60 of power tool 10 and supply power to motor 38 causing motor 38 to turn and produce a motive force. In some embodiments, if trigger 36 is only partially depressed lighting unit 60 of power tool 10 will turn on, but motor 38 of the power tool 10 will not rotate, thereby allowing the user to illuminate the work space of power tool 10 before operating power tool 10.

Housing 12 also includes a Forward/Neutral/Reverse switch 40 ("F/N/R switch") positioned in housing 12 to be adjustable by the user of power tool 10. In the illustrative embodiment, the F/N/R switch 40 is positioned in handle of the power tool 10 near trigger 36 and near motor housing 15. The illustrative embodiment of the F/N/R switch 40 includes a forward position, a neutral position, and reverse position. The forward position is configured to cause motor 38 to rotate in a forward direction when trigger 36 is depressed. The reverse position is configured to cause motor 38 to rotate in a backward, or reverse, direction when trigger 36 is depressed. The neutral position disconnects trigger 36 from motor 38, such that even if trigger 36 is depressed motor 38 will not rotate.

Housing 12 also includes a rotary knob 42 positioned on a rear portion 18 of the housing 12, such that knob 42 faces the user during normal operation of the power tool 10. Rotary knob 42 is configured to allow the user to select one of a plurality of modes of operation of the power tool 10. When knob 42 is rotated, it passes through a plurality of detents (not shown) that correspond to respective modes of operation. In some embodiments, knob 42 includes spring loaded features that engage with the respective detent features of the power tool 10. The spring loaded features on knob 42 may be "leaf spring" type features that are integral to the knob or may be a plurality of components to create a spring loaded feature set (e.g., a sliding plunger preloaded by a coil spring not shown, but disclosed in Provisional Patent Application No. 62/171706, titled 'Power Tool User Interfaces"). Housing 12 may also have a plurality of grooves to accept the spring loaded features on knob 42 to create the necessary detents that correspond to rotary positions of knob 42. In another embodiment, the detent grooves may be incorporated into the rear surface of the electric motor which is adjacent to knob 42. In yet another embodiment, the spring loaded features may be integrated into the tool housing or the rear surface of the motor, and the detent grooves may be integrated into the knob. In the illustrative embodiment, each detented rotary position of the knob corresponds to a respective operational mode of the power tool 100.

Power tool 10 may include user output devices 86 (see Fig. 5), such as indicator lights, to indicate the operational parameters of the power tool 10. In some embodiments, chip-on-board (COB) light emitting diodes (LEDs) are used as indicator lights to provide feedback to the user about the operating conditions of the power tool 10. The feedback provided by such indicator lights may include a battery charge level, an operational mode selected, a reminder to perform maintenance, a fault indication, or an indication of completion of fastening. The COB LEDs may also provide non-functional aesthetic lighting in the power tool 10. The COB LEDs may light up in different colors and/or may blink/flash in different patterns to convey various messages to the user. In some embodiments, the user output device is a COB LEDs configured to display the battery charge level as a "bar graph." Additionally or alternatively, the user output devices 86 (see Fig. 5) of the power tool 10 may be embodied as any type of audio outputs, visual outputs (e.g., lights or various screens), and/or tactile outputs, by way of example.

In the illustrative embodiment as indicated in the block diagram of Fig. 5, hammer case 14 supports an impact mechanism 80 and the output spindle 50. The hammer case 14 includes removable nose piece 32, which supports lighting unit 60 and includes a hammer case electrical connector 62 that is configured to mate with a corresponding housing electrical connector 64. The electrical connector in the housing 64 is connected to the battery and controller 70 of the power tool 10 and is configured to provide power and control signals to the electrical components of the hammer case 14, such as the lighting unit 60.

It is appreciated that impact mechanism 80 of the power tool 10 may be any type of impact mechanism, such as a ball-and-cam impact mechanism (sometimes called a "Potts" mechanism) or a Maurer impact mechanism. In general, impact mechanism 80 includes an anvil 84 coupled to output spindle 50 and configured to rotate about an output axis 66 and a hammer 82 coupled to the output of the motor and configured to rotate in response to rotation of motor 38. Hammer 82 includes one or more jaws (not shown) that are configured to strike anvil 84, and thereby cause anvil 84 and the connected output spindle 50 to rotate.

The illustrated output spindle 50 is formed as a single unitary, monolithic piece. A first end of output spindle 50 extends outside hammer case 14 and is configured to couple to any number of work attachments. A second end of output spindle 50 extends inside hammer case 14 and is coupled to anvil 84. In some embodiments, the second end of output spindle 50 may be formed with two jaws to create anvil 84. The jaws of hammer 82 are configured to impact anvil 84 to functionally drive output spindle 50 in response to rotation of motor 38. The term "functionally drive" is herein defined as a relationship in which the jaws of hammer 82 rotate to impact the respective jaws of anvil 84 and, thereby, cause intermittent rotation of output spindle 50. In some embodiments, the impact cycle is repeated twice every rotation of motor 38.

Hammer case 14 also includes a removable nose piece 32 positioned to be at the front of hammer case 14 of the power tool 10. Nose piece 32 includes lighting unit 60 and hammer case electrical connector 62 and is configured to keep the mating electrical connectors from inadvertently disconnecting.

As noted above, hammer case 14 may include at least one lighting unit 60. In the illustrative embodiment, lighting unit 60 on hammer case 14 is a headlight configured to illuminate the work space of the power tool 10. In the illustrative embodiment, the headlight is positioned in nose piece 32 of hammer case 14 such that it surrounds output spindle 50 and is configured to shine light along the output axis 66, defined by output spindle 50, and illuminate a work space of the power tool 10. Lighting unit 60 includes one or more lights installed in hammer case 14, a protective clear lens 61 configured to prevent damage and contamination to the lights caused by foreign debris, and electrical circuitry to provide power and control signals to the headlight. In the preferred embodiment, the one or more lights are COB LEDs formed as an annular ring that surrounds output spindle 50 and illuminates the work space of the power tool 10. In another embodiment, the one or more lights are two or more COB LEDs formed as arcs that cooperate to surround the output spindle.

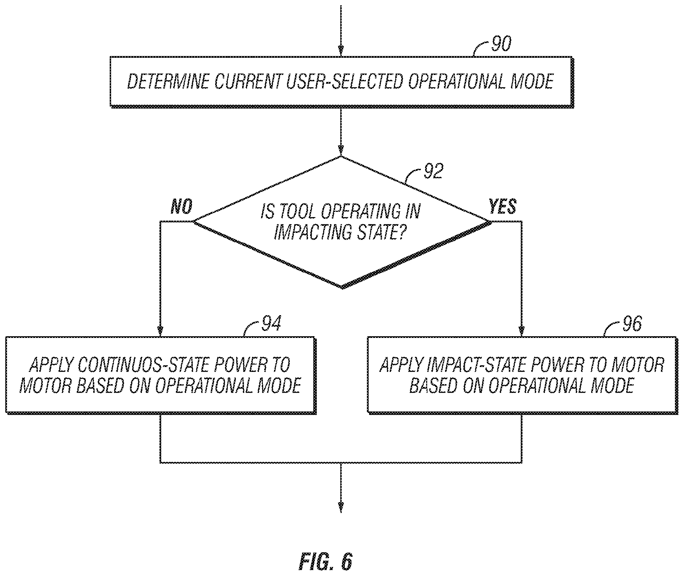

In the illustrative embodiment, the power tool 10 includes one or more user-selectable operational modes that are configured to allow the user to quickly perform tasks while preventing the user from over torqueing a fastener or otherwise damaging a work piece. Referring now to FIG. 6, a method for implementing the user-selected operational modes of the power tool 10 is shown as a simplified flow chart. The illustrative method comprises determining an operating phase of the fastening operation being performed by the power tool 10 as is indicated by reference numeral 90 and applying power to motor 38 of the power tool 10 based on the operating phase and the user-selected operational mode.

Controller 70 (see Fig. 5) of power tool 10 is operable to determine the phase of the fastening operation in which the power tool 10 is operating as indicated by reference numeral 92 in Fig. 6. In general, a fastening operation of an impact tool can be broken down into two distinct phases: (1) a continuous run phase 94 and (2) an impacting phase 96. Continuous run phase 94 occurs when the fastener is being run down. During continuous run phase 94, output spindle 50 is directly coupled to the rotor (not shown) of motor 38. This phase is characterized by high-speed, continuous rotation and low output torques. When the output spindle experiences more rotational resistance from the fastener being rotated by the impact tool, the impacting phase begins. During impacting phase 96, output spindle 50 experiences intermittent rotations related to the operation of the impact mechanism, lower rotational speeds, and higher output torque.

Determining the operating phase 90 of an impact tool that uses a brushless DC motor may be performed using a number of different methods. During operation of impact tool 10, the brushless DC motor requires controller 70 (e.g., a microprocessor) to switch power on and off through the various windings of the motor with precise timing. As such, controller 70 of power tool 10 monitors the rotational position and/or speed of motor 70. Additionally, power tool 10 may include one or more sensors to measure an amount of electrical current going through the motor windings. The sensed current may be used to determine the operational phase of the power tool 10 or it may be used to shut the motor off if the current becomes dangerously high.

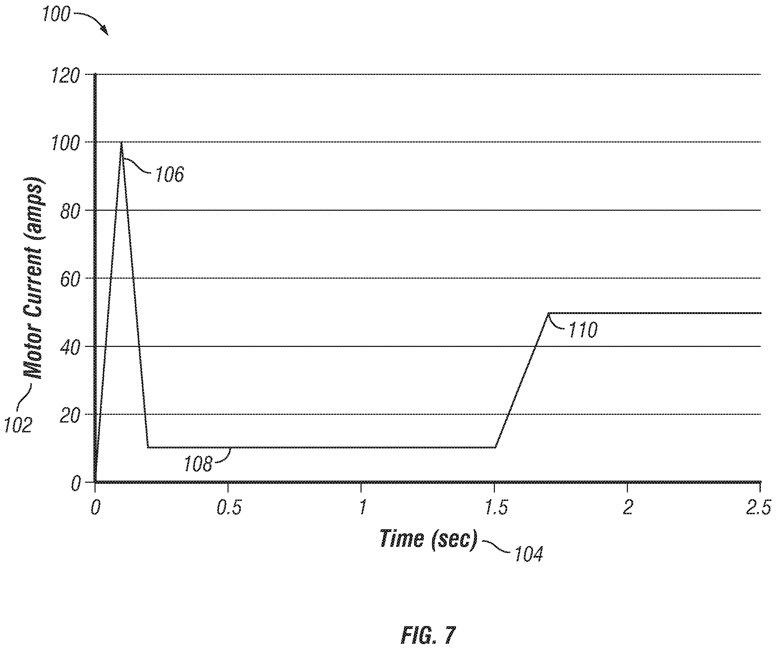

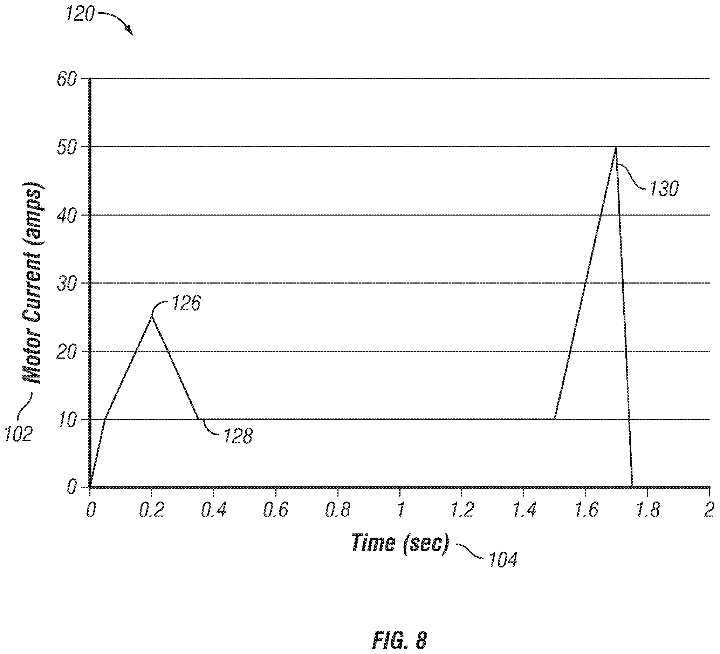

In the illustrative embodiment, the operating phase of the power tool 10 is determined by analyzing the current of the electric motor. As illustrated in charts 100 and 120 in FIGS. 7 and 8, respectively, during the impacting phase, the motor draws more current than during the continuous run phase. At the beginning of a fastening operation, when the motor begins rotating, there is an initial spike 106 and 126, respectively, in the current supplied to the motor. After the motor is rotating at full speed, the current required to maintain the speed of rotation of the motor is relatively low. Once the power tool 10 starts impacting, the current sharply rises because the load applied to the motor becomes greater due to the operation of the impacting mechanism. The various operational phases of the power tool 10 can be determined by monitoring for the rise in current drawn by the motor during the impacting phase.

The power tool 10 includes several operational modes selectable by the user through a user interface. These operational modes control the power output of the motor based on the phase of operation of the power tool 10. For example, if the power tool 10 is in a reduced power mode, full power will be delivered to motor during the continuous run phase and a reduced amount of power will be delivered to the motor during the impact phase.

In the illustrative embodiment, the user interface that is operable to select the various operational modes is knob 42 positioned on rear portion 18 of the power tool 10. Each position of knob 42 corresponds to a particular user-selectable operational mode. The power tool 10 may include any number and type of sensors (e.g., Hall-effect sensors, potentiometers, etc.) to convey the position of knob 42 to controller 70. In the illustrative embodiment, the power tool 10 includes four operational modes: a standard mode, a reduced power mode, a torque stick stability mode, and a snug-up mode. It will be appreciated that, in other embodiments, the power tool 10 may be provided with more or less than four operational modes.

The standard mode allows the user to operate the power tool 10 at full speed and full torque output during both the continuous run phase and the impacting phase. The standard mode gives the user full control of the power tool 10 through the trigger, but does not provide any particular protection against over-torqueing a fastener driven by the impact tool.

The reduced power mode allows the power tool 10 to operate at full speed when the fastener is being run down, for example, in the continuous run phase. After the power tool 10 enters the impacting phase, the controller reduces the power supplied by the motor, thereby reducing the rotation speed and the output torque of the output spindle. As shown by chart 100 in FIG. 7, that plots motor current 102 over time 104, when in the reduced power mode, the controller allows the motor to operate at full speed when the current through the motor is relatively low, as it normally would be when the fastener is being run down indicated at 108. When the power tool 10 begins to impact on the fastener, the current through the motor rises sharply as indicated at 110, which indicates to controller 70 that the impacting phase has begun and that the motor power shall be reduced. The reduced power mode allows the user to limit the torque applied to the fastener by the power tool 10 without having to manually reduce the power delivered by the power tool 10 (e.g., by easing off trigger 36) after the fastener has been run down and begins to tighten.

The torque stick stability mode may operate similarly to the reduced power mode described above. The torque stick stability mode is designed to reduce the vibrations or limit erratic oscillations of the impact mechanism when a torque stick or other extending apparatus is attached to output spindle 50. For example, when the user uses a torque stick or other extension in conjunction with an impact tool, the spring action of the torque stick or extension may cause the impact mechanism to oscillate in an erratic and unpredictable manner. This may cause the tool to vibrate excessively, it may cause discomfort to the user, it may cause excessive wear of the impact mechanism, or it may adversely affect the torque output of the power tool 10. To combat such effects, the controller may be configured to avoid specific operating speeds or bands of speeds that tend to excite oscillations. These speeds might be identified analytically or experimentally.

The snug-up mode allows the power tool 10 to rundown the fastener at a predetermined speed during the continuous run phase. In some embodiments, the run-down speed during the snug-up mode is less than the full speed of the motor. After the power tool 10 enters the impacting phase and begins to impact the output spindle, the power tool 10 will stop the motor after a predetermined amount of time of impacting. As shown in chart 120 of FIG. 8, when in the snug-up mode, controller 70 allows motor 38 to operate at a predetermined speed when the current through the motor is relatively low, as it normally would be when the fastener is being run down at 128. When power tool 10 begins to impact on the fastener the current through the motor will rise sharply at 130, which indicates to controller 70 that the impacting phase has begun and that the motor shall be turned off after a predetermined amount of time. Generally, the predetermined amount of time is determined by an internal clock of controller 70 of the power tool 10. The snug-up mode allows the user to apply a relatively small amount of torque to the fastener without adversely affecting the overall speed of the fastening operation. In some situations, the snug-up mode may allow the user to apply the final torque to the fastener with a hand operated wrench for fasteners where the amount of torque is critical. One advantage of the above mentioned user-selected operational modes is that the fastening speed of the power tool 10 is maintained during rundown, while the final torque applied to a fastener by the power tool 10 is limited.

In addition to the methods of determining transitions between operating phases described above, other methods may be used to detect the transition between operating phases of the power tool 10. For example, the operating phase of the fastening operation may be determined by detecting the speed of rotation of the motor. Monitoring motor speed may be accomplished by monitoring the frequency of the back electromagnetic field ("back EMF") coming from the motor, monitoring the output of an encoder positioned near the motor rotor, monitoring the output of a resolver positioned on the motor rotor, or monitoring the output of Hall-effect sensors positioned in close proximity to the rotor magnets of the brushless DC motor. Controller 70 may determine when the motor has decelerated due to an increased motor load (e.g., because the power tool 10 is now impacting). In another example, a motor drive can determine an abrupt change in motor torque by monitoring the control loop error values. As the motor load abruptly changes, the control loop error will increase dramatically indicating that the mechanism has begun to impact. In another example, the controller can monitor battery voltage. As the motor load and current draw of the motor increase, the internal resistance of the battery will cause its voltage to drop indicating that the mechanism is impacting. In yet another example, the controller may monitor the output signals of a microphone positioned in the power tool 10. When the mechanism begins to impact, the noise generated by the impact mechanism will be received by the microphone, which will generate an output signal sent to controller 70. In still another example, a sensor may be installed in or near the impact mechanism to determine if the hammer has moved axially rearward. This sensor might be embodied as a Hall-effect sensor, a linear variable differential transformer (LVDT), or a microswitch. In another example, a torque sensor may be installed between the motor and impact mechanism. When the measured torque increases dramatically, it indicates to the controller that the mechanism is impacting. Other types of sensors installed on the power tool 10 may include an anvil angle encoder, a hammer angle sensor, a hammer axial travel senor, an accelerometer on the hammer, a motor brush bounce sensor configured to detect brief interrupts caused when a brush leaves the commutator of the motor, a cone clutch integrated into the front of the power tool 10 configured to begin slipping at a preset torque, or a sensor to detect small torsional vibrations to determine the socket angle. It is contemplated that any of these feedback mechanisms (including any combination the feedback mechanisms mentioned above) may be used to monitor the operating phase of the power tool 10 in various embodiments.

In addition to the user-selectable operational modes described in detail above, the power tool 10 may include other user-selectable operation modes. For example, the power tool 10 may include a snug-up soft mode which includes rotating output spindle 50 at full speed during the continuous run phase, followed by impacting the output spindle at a reduced power for a fixed amount of time during the impacting phase. In another example, power tool 10 may include any of the modes as described above but concluded with a number of impacts in a reverse direction. In yet another example, power tool 10 may include a low torque or continuous mode where power tool 10 stays in the continuous run phase and never enters the impacting phase of the fastening operation. In still another example, power tool 10 may include a cross thread mode where, at the beginning of the continuous run phase, output spindle 50 rotates at a slow speed for a time period (or for a number of rotations) to ensure that the fastener being fastened is not cross threaded before the output spindle begins rotating at full speed. In another example, the controller may run the motor at a reduced speed while the fastener is being run down and shut off the motor immediately as the load on the motor increases to prevent any impacting from the mechanism, allowing power tool 10 to be used as a direct drive tool. In still another example, the power tool 10 may include user-selected operational modes tailored to specific industrial applications, such as tire changing, decking, steel erection, line work, or other industrial applications.

It is contemplated that various embodiments of the power tool 10 may include any combination of the operational modes described in the present disclosure. These various embodiments of power tool 10 may be mechanically identical but include different software (implementing different combinations of the operational modes), allowing for a diverse product line at reduced cost of product design and manufacturing.

## Claims

1. A hand-held power tool (10) comprising:
a housing assembly supporting an electric motor (38) having a rotor configured to rotate when the electric motor is supplied with power;
an output spindle (50) protruding from an output end of the housing assembly;
wherein the output spindle is functionally coupled to the rotor such that the output spindle rotates in response to a rotation of the rotor;
a motor endbell located on the housing assembly adjacent the electric motor and opposite the output spindle;
a controller (70) that is operable to determine phases of a fastening operation in which the hand-held power tool is operating;
wherein the phases of the fastening operation of the hand-held power tool comprise two phases: (1) a continuous run phase and (2) an impacting phase;
wherein the continuous run phase is **characterized by** a first rotational speed, continuous rotation, and low output torque of the output spindle until the output spindle experiences a threshold rotational resistance from a fastener being rotated by the hand-held power tool;
wherein the impacting phase begins once the threshold rotational resistance from a fastener being rotated by the hand-held power tool occurs; and
wherein the impacting phase is **characterized by** the output spindle experiencing intermittent rotations at a second rotational speed that is a lower speed than the first rotational speed, and is at a higher output torque;
wherein during the fastening operation the controller (70) monitors the current through the motor (38) and determines that the fastening operation has transitioned between the initial continuous run phase and the later impacting phase by detecting a sharp rise in the current through the motor when the fastening operation transitions to the impacting phase, **characterised in that**
during the impacting phase, the motor (38) draws more current than during the continuous run phase such that after an initial spike in the current supplied to the electric motor when the electric motor (38) begins rotating less current than the initial spike is applied to the electric motor (38) to maintain a constant speed, wherein once impacting has begun the current applied to the electric motor increases while the load applied to the electric motor increases.

2. The hand-held power tool of Claim 1, wherein during the impacting phase, the motor draws more current than during the continuous run phase.

3. The hand-held power tool of Claim 1, wherein the power to the electric motor (38) is based on the phases of the fastening operation and a plurality of operation modes.

4. The hand-held power tool of Claim 1, wherein the electric motor is a brushless DC motor, wherein the controller (70) switches power on and off through windings of the brushless DC motor to monitor a rotational position or speed of the brushless DC motor.

5. The hand-held power tool of any one of the preceding claims, further comprising:
a user interface configured to select one of a plurality of operation modes of the hand-held power tool;
wherein the plurality of operation modes control the power supplied to the electric motor based on the phases of the fastening operation of the hand-held power tool.

6. The hand-held power tool of Claim 5, wherein the plurality of operation modes are selected from a group comprising:
a standard mode, such that full power is delivered to the electric motor during the continuous run phase and the impact phase;
a reduced power mode, such that full power is delivered to the electric motor during the continuous run phase and less than the full power is delivered to the electric motor during the impact phase;
a torque stick stability mode, such that the controller (70) is configured to avoid operating speeds that create oscillations in the hand-held power tool that cause the hand-held power tool to vibrate;
a snug-up mode, such that the controller (70) maintains the electric motor operating for a predetermined amount of time after a rise in current is detected by the controller (70) indicating that the hand-held power tool has entered the impacting phase, and wherein the predetermined amount of time is determined by an internal clock of the controller (70);
a snug-up soft mode, such that rotating the output spindle at full speed during the continuous run phase is followed by impacting the output spindle at a reduced power for a fixed amount of time during the impacting phase.

7. The hand-held power tool of Claim 6, wherein when in the reduced power mode and when the hand-held power tool impacts, the current through the electric motor (38) rises which indicates to the controller (70) that the impacting phase has begun and reduces the power delivered to the electric motor.

8. The hand-held power tool of Claim 6 or 7, wherein during the snug-up mode the controller (70) keeps the electric motor (38) operating for a predetermined amount of time at a predetermined speed during the continuous run phase, and wherein the predetermined speed is less than full speed of the electric motor.

9. The hand-held power tool of any of Claims 5 to 8, wherein the plurality of operation modes are configured to include a number of impacts in a reverse direction after any one of the plurality of operation modes has concluded operation.

## Patentansprüche

1. Ein handgehaltenes Elektrowerkzeug (10), beinhaltend:
eine Gehäuseanordnung, die einen elektrischen Motor (38) stützt, der einen Rotor aufweist, welcher konfiguriert ist, um zu rotieren, wenn dem elektrischen Motor Leistung zugeführt wird;
eine Ausgangsspindel (50), die von einem Ausgangsende der Gehäuseanordnung vorsteht;
wobei die Ausgangsspindel funktionsfähig so mit dem Rotor gekoppelt ist, dass die Ausgangsspindel als Reaktion auf eine Rotation des Rotors rotiert;
ein Motorendgehäuse, das auf der Gehäuseanordnung neben dem elektrischen Motor und entgegengesetzt zu der Ausgangsspindel befindlich ist;
eine Steuereinheit (70), die betriebsfähig ist, um Phasen eines Befestigungsbetriebs, in denen das handgehaltene Elektrowerkzeug betrieben wird, zu bestimmen;
wobei die Phasen des Befestigungsbetriebs des handgehaltenen Elektrowerkzeugs zwei Phasen beinhalten: (1) eine Dauerlaufphase und (2) eine Schlagphase;
wobei die Dauerlaufphase durch Folgendes gekennzeichnet ist: eine erste Rotationsgeschwindigkeit, Dauerrotation und ein geringes Ausgangsdrehmoment der Ausgangsspindel, bis die Ausgangsspindel einen Grenzrotationswiderstand von einem Befestigungselement, das mittels des handgehaltenen Elektrowerkzeugs rotiert wird, erfährt;
wobei die Schlagphase beginnt, sobald der Grenzrotationswiderstand von einem Befestigungselement, das mittels des handgehaltenen Elektrowerkzeugs rotiert wird, auftritt; und
wobei die Schlagphase **dadurch gekennzeichnet ist, dass** die Ausgangsspindel intermittierende Rotationen mit einer zweiten Rotationsgeschwindigkeit erfährt, die eine geringere Geschwindigkeit als die erste Rotationsgeschwindigkeit ist und die mit einem höheren Ausgangsdrehmoment stattfindet;
wobei während des Befestigungsbetriebs die Steuereinheit (70) den Strom durch den Motor (38) überwacht und bestimmt, dass der Befestigungsbetrieb von der anfänglichen Dauerlaufphase in die spätere Schlagphase übergegangen ist, durch das Detektieren eines starken Anstiegs des Stroms durch den Motor, wenn der Befestigungsbetrieb in die Schlagphase übergeht, **dadurch gekennzeichnet, dass**
der Motor (38) während der Schlagphase mehr Strom zieht als während der Dauerlaufphase, sodass nach einer anfänglichen Spitze des dem elektrischen Motor zugeführten Stroms, wenn der elektrische Motor (38) das Rotieren beginnt, weniger Strom als die anfängliche Spitze auf den elektrischen Motor (38) angewendet wird, um eine konstante Geschwindigkeit aufrechtzuerhalten, wobei sich, sobald das Schlagen begonnen hat, der auf den elektrischen Motor angewendete Strom erhöht, während sich die auf den elektrischen Motor angewendete Last erhöht.

2. Handgehaltenes Elektrowerkzeug gemäß Anspruch 1, wobei während der Schlagphase der Motor mehr Strom zieht als während der Dauerlaufphase.

3. Handgehaltenes Elektrowerkzeug gemäß Anspruch 1, wobei die Leistung zu dem elektrischen Motor (38) auf den Phasen des Befestigungsbetriebs und einer Vielzahl von Betriebsmodi basiert.

4. Handgehaltenes Elektrowerkzeug gemäß Anspruch 1, wobei der elektrische Motor ein bürstenloser Gleichstrommotor ist, wobei die Steuereinheit (70) Leistung durch Wicklungen des bürstenlosen Gleichstrommotors an- und ausschaltet, um eine Rotationsposition oder -geschwindigkeit des bürstenlosen Gleichstrommotors zu überwachen.

5. Handgehaltenes Elektrowerkzeug gemäß einem der vorhergehenden Ansprüche, ferner beinhaltend:
eine Benutzerschnittstelle, die konfiguriert ist, um einen von einer Vielzahl von Betriebsmodi des handgehaltenen Elektrowerkzeugs auszuwählen;
wobei die Vielzahl von Betriebsmodi die dem elektrischen Motor zugeführte Leistung basierend auf den Phasen des Befestigungsbetriebs des handgehaltenen Elektrowerkzeugs steuert.

6. Handgehaltenes Elektrowerkzeug gemäß Anspruch 5, wobei die Vielzahl von Betriebsmodi aus einer Gruppe ausgewählt ist, beinhaltend:
einen Standardmodus, sodass der elektrische Motor während der Dauerlaufphase und der Schlagphase mit voller Leistung versorgt wird;
einen Modus reduzierter Leistung, sodass während der Dauerlaufphase der elektrische Motor mit voller Leistung versorgt wird und während der Schlagphase der elektrische Motor mit weniger als der vollen Leistung versorgt wird;
einen Drehmomentstabstabilitätsmodus, sodass die Steuereinheit (70) konfiguriert ist, um Betriebsgeschwindigkeiten zu vermeiden, die Schwingungen in dem handgehaltenen Elektrowerkzeug erzeugen, die bewirken, dass das handgehaltene Elektrowerkzeug vibriert;
einen Snug-Up-Modus, sodass die Steuereinheit (70) den Betrieb des elektrischen Motors für eine vorgegebene Zeitdauer nach dem Detektieren eines Stromanstiegs durch die Steuereinheit (70), der angibt, dass das handgehaltene Elektrowerkzeug in die Schlagphase gewechselt hat, aufrechterhält, und wobei die vorgegebene Zeitdauer durch einen internen Zeitgeber der Steuereinheit (70) bestimmt wird;
einen Snug-Up-Soft-Modus, sodass auf das Rotieren der Ausgangsspindel mit voller Geschwindigkeit während der Dauerlaufphase das Schlagen der Ausgangsspindel mit einer reduzierten Leistung für eine festgelegte Zeitdauer während der Schlagphase folgt.

7. Handgehaltenes Elektrowerkzeug gemäß Anspruch 6, wobei, wenn im Modus reduzierter Leistung und wenn das handgehaltene Elektrowerkzeug schlägt, der Strom durch den elektrischen Motor (38) ansteigt, was der Steuereinheit (70) angibt, dass die Schlagphase begonnen hat, und die Leistung, mit der der elektrische Motor versorgt wird, reduziert.

8. Handgehaltenes Elektrowerkzeug gemäß Anspruch 6 oder 7, wobei während des Snug-Up-Modus die Steuereinheit (70) den elektrischen Motor (38) für eine vorgegebene Zeitdauer mit einer vorgegebenen Geschwindigkeit während der Dauerlaufphase weiter betreibt und wobei die vorgegebene Geschwindigkeit kleiner ist als die volle Geschwindigkeit des elektrischen Motors.

9. Handgehaltenes Elektrowerkzeug gemäß einem der Ansprüche 5 bis 8, wobei die Vielzahl von Betriebsmodi konfiguriert ist, um eine Anzahl von Schlägen in einer Gegenrichtung, nachdem ein beliebiger der Vielzahl von Betriebsmodi den Betrieb beendet hat, zu umfassen.

## Revendications

1. Une machine portative à moteur tenue à la main (10) comprenant :
un ensemble boîtier soutenant un moteur électrique (38) muni d'un rotor configuré pour tourner lorsque le moteur électrique est alimenté en puissance ;
une broche de sortie (50) faisant saillie depuis une extrémité de sortie de l'ensemble boîtier ;
où la broche de sortie est couplée fonctionnellement au rotor de telle sorte que la broche de sortie tourne en réponse à une rotation du rotor ;
un flasque en bout d'arbre de moteur situé sur l'ensemble boîtier de façon adjacente au moteur électrique et à l'opposé de la broche de sortie ;
un organe de commande (70) qui peut fonctionner pour déterminer des phases d'une opération de fixation dans laquelle la machine portative à moteur tenue à la main fonctionne ;
où les phases de l'opération de fixation de la machine portative à moteur tenue à la main comprennent deux phases : (1) une phase de marche en continu et (2) une phase de percussion ;
où la phase de marche en continu est **caractérisée par** une première vitesse de rotation, une rotation en continu, et un faible couple de sortie de la broche de sortie jusqu'à ce que la broche de sortie subisse une résistance seuil à la rotation provenant d'un élément de fixation qui est tourné par la machine portative à moteur tenue à la main ;
où la phase de percussion commence une fois que se produit la résistance seuil à la rotation provenant d'un élément de fixation qui est tourné par la machine portative à moteur tenue à la main ; et
où la phase de percussion est **caractérisée par le fait que** la broche de sortie subit des rotations intermittentes à une deuxième vitesse de rotation qui est une vitesse inférieure à la première vitesse de rotation, et est à un couple de sortie plus élevé ;
où pendant l'opération de fixation l'organe de commande (70) surveille le courant passant par le moteur (38) et détermine que l'opération de fixation a effectué une transition entre la phase initiale de marche en continu et la phase ultérieure de percussion en détectant une forte élévation du courant passant par le moteur lorsque l'opération de fixation effectue une transition vers la phase de percussion, **caractérisée en ce que**
pendant la phase de percussion, le moteur (38) absorbe plus de courant que pendant la phase de marche en continu de telle sorte qu'après une pointe initiale du courant alimentant le moteur électrique lorsque le moteur électrique (38) commence à tourner, moins de courant que dans la pointe initiale est appliqué au moteur électrique (38) afin de maintenir une vitesse constante, où une fois que la percussion a commencé, le courant appliqué au moteur électrique augmente tandis que la charge appliquée au moteur électrique augmente.

2. La machine portative à moteur tenue à la main de la revendication 1, où pendant la phase de percussion, le moteur absorbe plus de courant que pendant la phase de marche en continu.

3. La machine portative à moteur tenue à la main de la revendication 1, où la puissance se rendant au moteur électrique (38) est basée sur les phases de l'opération de fixation et une pluralité de modes d'opération.

4. La machine portative à moteur tenue à la main de la revendication 1, où le moteur électrique est un moteur CC sans balai, où l'organe de commande (70) met l'alimentation sous et hors de tension par le biais d'enroulements du moteur CC sans balai afin de surveiller une position ou une vitesse de rotation du moteur CC sans balai.

5. La machine portative à moteur tenue à la main de n'importe laquelle des revendications précédentes, comprenant en outre :
une interface utilisateur configurée pour sélectionner un mode d'une pluralité de modes d'opération de la machine portative à moteur tenue à la main ;
où la pluralité de modes d'opération commandent la puissance alimentant le moteur électrique sur la base des phases de l'opération de fixation de la machine portative à moteur tenue à la main.

6. La machine portative à moteur tenue à la main de la revendication 5, où la pluralité de modes d'opération sont sélectionnés dans un groupe comprenant :
un mode standard, de telle sorte qu'une pleine puissance est apportée au moteur électrique pendant la phase de marche en continu et la phase de percussion ;
un mode de puissance réduite, de telle sorte qu'une pleine puissance est apportée au moteur électrique pendant la phase de marche en continu et moins que la pleine puissance est apportée au moteur électrique pendant la phase de percussion ;
un mode de stabilité de bâton de couple, de telle sorte que l'organe de commande (70) est configuré pour éviter des vitesses opérationnelles qui créent des oscillations dans la machine portative à moteur tenue à la main qui amènent la machine portative à moteur tenue à la main à vibrer ;
un mode de vissage, de telle sorte que l'organe de commande (70) maintient le moteur électrique en opération pendant une quantité de temps prédéterminée après qu'une élévation de courant a été détectée par l'organe de commande (70) indiquant que la machine portative à moteur tenue à la main est entrée dans la phase de percussion, et
où la quantité de temps prédéterminée est déterminée par une horloge interne de l'organe de commande (70) ;
un mode de vissage mou, de telle sorte qu'une rotation de la broche de sortie à pleine vitesse pendant la phase de marche en continu est suivie par la percussion de la broche de sortie à une puissance réduite pendant une quantité de temps fixe pendant la phase de percussion.

7. La machine portative à moteur tenue à la main de la revendication 6, où lorsqu'elle se trouve dans le mode de puissance réduite et lorsque la machine portative à moteur tenue à la main percute, le courant passant par le moteur électrique (38) s'élève, ce qui indique à l'organe de commande (70) que la phase de percussion a commencé et réduit la puissance apportée au moteur électrique.

8. La machine portative à moteur tenue à la main de la revendication 6 ou de la revendication 7, où pendant le mode de vissage, l'organe de commande (70) garde le moteur électrique (38) en opération pendant une quantité de temps prédéterminée à une vitesse prédéterminée pendant la phase de marche en continu, et où la vitesse prédéterminée est inférieure à une pleine vitesse du moteur électrique.

9. La machine portative à moteur tenue à la main de n'importe lesquelles des revendications 5 à 8, où la pluralité de modes d'opération sont configurés pour inclure un nombre de percussions dans un sens inverse après que n'importe lequel des modes de la pluralité de modes d'opération a terminé son fonctionnement.
